# EUROPÄISCHE PATENTSCHRIFT

(11) **EP 3 225 889 B1**
(45) Veröffentlichungstag und Bekanntmachung des Hinweises auf die Patenterteilung: **15.01.2020**
(21) Anmeldenummer: 16201790.9
(22) Anmeldetag: 01.12.2016
(51) Int. Cl.: F16J 15/08, B21D 39/03

(54) **LASCHENVERBINDUNG ZUR VERBINDUNG VON BLECHLAGEN UND ZYLINDERKOPFDICHTUNG**
TAB CONNECTION FOR CONNECTING SHEET METAL LAYERS AND CYLINDER HEAD GASKET
ÉCLISSAGE POUR LIAISON DE COUCHES DE TÔLES ET DE JOINT DE CULASSE

(30) Priorität: 29.03.2016 DE 102016105705
(43) Veröffentlichungstag der Anmeldung: 04.10.2017
(73) Patentinhaber: Federal-Mogul Sealing Systems GmbH, 57562 Herdorf (DE)
(72) Erfinder: Leukel, Tobias, 57562 Herdorf (DE)
(74) Vertreter: Becker Kurig Straus

(56) Entgegenhaltungen:
- EP-A1- 1 734 245
- JP-A- S5 533 809
- JP-A- S57 190 738
- US-B2- 7 059 610

## Beschreibung

Die vorliegende Erfindung betrifft eine Laschenverbindung für Blechlagen sowie Bleche, die mit einer solchen Laschenverbindung verbunden sind, insbesondere eine mehrlagige Metall-Zylinderkopfdichtung, deren Lagen durch eine Laschenverbindung miteinander verbunden sind. Es sind vorzugsweise mehrere Blechlagen vorgesehen, die durch die Laschenverbindung miteinander verbunden sind

Bisher wurden Nieten verwendet, um Blechlagen beispielweise von Zylinderkopfdichtungen miteinander zu verbinden. Nieten sind Zukaufteile. Durch Auftragung von Schließ- und Setzkopf können die Nieten nicht im verpressten Bereich der Zylinderkopfdichtung von Motorblock und Zylinderkopf verbaut werden.

Es ist ebenfalls bekannt, die Blechlagen beispielsweise von Zylinderkopfdichtungen mit Schweißen miteinander zu verbinden. Durch die hohen Temperaturen beim Schweißen entsteht jedoch eine Wärmeeinflusszone (WEZ), welche das Metallgefüge der Zylinderkopfdichtung verändert.

Das Fügen einzelner Blechlagen insbesondere von Blechlagen einer mehrlagigen Metall-Zylinderkopfdichtung soll kostengünstiger und insbesondere ohne zusätzliche Teile und ohne eine Änderung des metallischen Gefüges erreicht werden. Ferner ist es wünschenswert, wenn es möglich wäre, dass eine Verbindung zweier Metall-Lagen einer metallischen Metallgefüge nicht verändert wird, was sonst eine Verfestigung der Blechlagen zur Folge haben könnte. Weiterhin sollte das Verfahren zum Fügen nicht zu einer erhöhten Dicke der Zylinderkopfdichtung an der Fügestelle führen.

Die vorliegende Erfindung stellt eine Laschenverbindung zum Verbinden von Blechlagen mit den Merkmalen des Anspruchs 1 bereit, bevorzugte Ausführungen sind in den abhängigen Ansprüchen beschrieben.

Das Dokument EP 1 734 245 A1 offenbart eine Laschenverbindung nach der Präambel von Anspruch 1.

Die Laschenverbindung umfasst dabei eine erste Blechlage mit mindestens einer ersten Ausnehmung in der bzw. an deren Rand jeweils mindestens eine erste Verbindungslasche gebildet ist, und eine zweite Blechlage mit mindestens einer zweiten Ausnehmung in bzw. an deren Rand die jeweils mindestens eine zweite Verbindungslasche gebildet ist. Die erste Verbindungslasche und die zweite Verbindungslasche stehen in einem Überlappungsbereich miteinander in Eingriff.

Im Gegensatz zu herkömmlichen Laschenverbindungen, bei denen eine Lasche jeweils um ein benachbartes Blech herumgebogen wird, stehen hier nur zwei Laschen mit einer relativ geringen Überlappung miteinander in Eingriff. Die Verbindung ist nicht so haltbar wie eine vergleichbare Verbindung durch Nieten oder Schweißen, benötigt jedoch keine Schweißvorrichtung und ebenfalls keine Zusatzteile wie Nieten und dergleichen. Die Verbindung kann durch Einschnappen der Laschen bzw. Zungen hergestellt werden, was lediglich eine elastische Verformung der Laschen erfordert. Damit ist auch der Aufwand zur Erzeugung der Verbindung äußerst gering, da die Ausnehmungen direkt beim Ausstanzen der einzelnen Blechlagen mit erzeugt werden können, und so keinen zusätzlichen Arbeitsschritt erfordern.

In einer weiteren beispielhaften Ausführungsform der vorliegenden Erfindung bildet die erste Blechlage (bzw. die Mittelebene der ersten Blechlage) eine erste Ebene, und die zweite Blechlage (bzw. die Mittel-Ebene der zweiten Blechlage) bildet eine zweite Ebene. Bei der Laschenverbindung erstreckt sich die mindestens eine erste Lasche von der ersten Ebene in die zweite Ebene, und die mindestens eine zweite Lasche erstreckt sich von der zweiten Ebene in die erste Ebene. Die Laschen sind dabei auf Biegung belastet und an ihren Enden im Wesentlichen (und im verpressten Zustand genau) um die Dicke des jeweils anderen Bleches ausgelenkt.

In einer anderen beispielhaften Ausführungsform der vorliegenden Erfindung weist die zweite Blechlage in einem Bereich, in dem sich die mindestens eine erste Lasche von der ersten Ebene in die zweite Ebene erstreckt, die mindestens eine zweite Ausnehmung auf und die erste Blechlage weist in einem Bereich, in dem sich die mindestens eine zweite Lasche von der zweiten Ebene in die erste Ebene erstreckt, die mindestens eine erste Ausnehmung auf. Die Laschen können sich in Richtung der jeweils anderen bzw. angrenzenden Blechalge bzw. in Ebene der angrenzenden Blechlage hinein erstrecken, da an dieser Stelle eine Ausnehmung in der angrenzenden Blechlage vorgesehen ist. Beide Laschen sind dabei bevorzugt so ausgeführt, dass sie im Bereich der Überlappung jeweils um die Dicke der anderen Blechlage verformt sind. Es ist jedoch ebenfalls bei unterschiedlich Dicken oder unterschiedlich festen Blechlagen vorgesehen, dass die Verbindung aus der Ebene der Blechlagen vorsteht. Beim Verpressen der Blechlagen beispielsweise zwischen einem Zylinderkopf und einem Motorblock wird die Verbindung in die Ebene der Blechlagen gedrückt, sodass die verpresste Verbindung nicht über die Ebene der Blechlagen vorsteht, da jeweils nur die beiden Blechlagen aufeinanderliegen.

Bei einer weiteren Ausführungsform der vorliegenden Erfindung ist die mindestens eine erste und/oder zweite Lasche im Wesentlichen streifenförmig ausgeführt. Die Laschen weisen in dieser Ausführung eine einheitliche Breite auf. Eine streifenförmige Lasche und ihr Verhalten kann insbesondere nach den technischen Formeln für einen einseitig eingespannten Balken berechnet werden. Es ist also möglich, die Eigenschaften der Laschen sehr gut mit vorhandenen physikalischen Modellen vorherzugsagen, was es ermöglicht, die Eigenschaften der gesamten Verbindung auch ohne komplizierte Simulation vorherzusagen.

Bei einer zusätzlichen Ausführung der vorliegenden Erfindung wird eine Laschenverbindung vorgeschlagen, bei der die mindestens eine erste und/oder zweite Ausnehmung eine einheitliche Breite aufweisen. Bei dieser Ausführung können die Ausnehmungen im Wesentlichen U-Förmig ausgeführt sein, wobei die Schenkel der Ausnehmung ebenfalls nur als Schnitte ausgeführt sein können. Wenn die Schenkel der U-förmigen Ausnehmungen nur als Schnitte ausgeführt sind, weist die Ausnehmung eine Breite auf, die im Wesentlichen der Breite der entsprechenden Lasche entspricht.

Bei einer zusätzlichen weiteren beispielhaften Ausführungsform der vorliegenden Erfindung ist eine Breite der mindestens einen ersten und/oder zweiten Ausnehmungen im Wesentlichen genauso groß ist wie eine entsprechende Breite der jeweiligen mindestens einen zweiten und/oder ersten Lasche. In dieser Ausführungsform erstrecken sich die Laschen sich im Wesentlichen über die gesamte Breite der Öffnungen bzw. Ausnehmungen. Dadurch kann die Laschenverbindung in einer Richtung senkrecht zu einer Erstreckungsrichtung der Lachen orientiert bzw. ausgerichtet werden. Die Laschen, bzw. die Blechlagen können in ihrer Erstreckungsrichtung bzw. der Erstreckungsrichtung der Laschen leicht versetzt werden. Wenn die Laschen (mindestens eines der Bleche) jedoch eine Breite aufweisen, die der Breite der jeweiligen Ausnehmung des anderen Bleches entsprechen, kann sich die Lasche nicht seitlich (in einer Richtung senkrecht zur Erstreckungsrichtung der Lasche) bewegen, wodurch die Blechlagen pro Laschenverbindung in eine Richtung zueinander orientiert/ausgerichtet werden können.

Bei einer anderen Ausführungsform der vorliegenden Erfindung ist eine Breite der mindestens einen ersten und/oder zweiten Ausnehmungen größer ist als eine Breite der jeweiligen mindestens einen zweiten und/oder ersten Lasche. Hier erstrecken sich die Laschen im Wesentlichen nicht über die gesamte Breite der Öffnungen bzw. Ausnehmungen wodurch die Laschenverbindung in einer Richtung senkrecht zu einer Erstreckungsrichtung der Lachen beweglich bleibt. Bevorzugt ist ein Breitenunterschied zwischen einer Lasche und einer entsprechenden Ausnehmung kleiner als eine Länge der Überlappungsbereichs einer ersten und einer zweiten Lasche. Damit gestattet die Laschenverbindung einen leichten Versatz in alle Richtungen, um beispielsweise unterschiedliche Wärmeausdehnungen ausgleichen zu können. Weiterhin sollte ein lateraler Versatz nur in einem Bereich möglich sein, der kleiner ist als eine Länge eines Überlappungsbereichs wie später gezeigt wird, um zu verhindern, dass bei in einem Winkel zueinander angeordneten Laschenverbindungen der laterale Versatz der einen Verbindung es ermöglicht dass die beiden Laschen der anderen Laschenverbindung außer Eingriff geraten können.

Bei einer weiteren beispielhaften Ausführung der vorliegenden Erfindung unterscheidet sich eine Form der mindestens einen ersten Lasche von einer Form der mindesten einen zweiten Lasche. Bei einer zusätzlichen beispielhaften Ausführung der vorliegenden Erfindung unterscheidet sich eine Form der mindestens einen ersten Ausnehmung von einer Form der mindestens einen zweiten Ausnehmung. Diese Ausführungen betreffen Laschenverbindungen, die nicht-symmetrisch ausgeführt sind. Es ist dabei möglich, dass sich die Abmessungen der Laschen und insbesondere der Ausnehmungen deutlich voneinander unterscheiden. Es kann dabei eine Ausnehmung beispielsweise mehrere Laschen umfassen. Weiterhin können die Laschen unterschiedliche Abmessungen aufweisen, um beispielswiese unterschiedliche Materialdicken und/oder Festigkeiten der ersten zweiten Blechlage auszugleichen.

Bei einer zusätzlichen beispielhaften Ausführung der vorliegenden Erfindung weist die mindestens eine erste Ausnehmung im Wesentlichen die Form eines gleichseitigen Dreiecks auf, wobei die drei Seiten drei erste Laschen bilden und wobei die mindestens eine zweite Ausnehmung drei im Wesentlichen nierenförmige Ausnehmungen umfasst, die zusammen auf einem Kreis liegen, wobei die Laschen radial nach außen weisen.

Durch die besondere Geometrie der einzelnen Lagen ist ein Verbindungspunkt ausreichend in alle drei Raumrichtungen fixiert. Die Materialeigenschaft von Federstahl wird dabei ausgenutzt. Die Laschenverbindung bildet dabei einen Verbindungspunkt, der in drei Richtungen stabilisiert ist. Weiterhin kann diese Verbindung schnell und einfach durch Stanzen und elastisches Verformen der Laschen bzw. Zungen hergestellt werden, ohne dass dazu besondere Maschinen notwendig wären. Die Laschen an der dreieckigen Ausnehmung können durch deren Seitenkanten gebildet werden. Die Form der Lasche wird dann im Wesentlichen durch den Überlappungsbereich definiert. In diesem Fall bildet die Lasche keine Fahne sondern ist der Teil der Blechlage der gegenüber einem Umkreis der dreieckigen Ausnehmung nach innen vorspringt.

Bei einer anderen Ausführungsform der vorliegenden Erfindung weist die erste Blechlage eine andere Dicke auf als eine Dicke der zweiten Blechlage. Durch eine geeignete Wahl der Abmessungen der Laschen insbesondere der Länge und Breite der Laschen kann erreicht werden, dass die Laschenverbindung auch bei unterschiedlich dicken und unterschiedlich festen Materialen innerhalb der Dicke der beiden Blechlagen liegt. Hierfür muss lediglich die Länge der Lasche einer stabileren / dickeren Lage gegenüber einer Länge einer dünneren weicheren Lage erhöht werden. Es ist ebenfalls möglich eine Breite der Lasche einer stabileren / dickeren Lage gegenüber einer Breite einer dünneren weicheren Lage verringert werden. Es ist selbstverständlich ebenfalls möglich sich verjüngende Laschen zu verwenden.

Gemäß einem anderen Aspekt der vorliegenden Erfindung werden Bleche bereitgestellt, die mit mindestens einer der vorstehend beschriebenen Laschenverbindungen verbunden sind. Obgleich die vorliegende Erfindung hauptsächlich in Hinblick auf eine Tätigkeit im Bereich von mehrlagigen metallischen Zylinderkopfdichtungen entstanden ist, kann sie ebenfalls in anderen Anwendungsbereichen eingesetzt werden, bei denen Metallbleche einfach schnell und kostengünstig miteinander verbunden werden sollen.

Gemäß einem weiteren Aspekt der vorliegenden Erfindung wird eine mehrlagige Metall-Zylinderkopfdichtung bereitgestellt, die mindestens eine erste Blechlage und mindestens eine zweite Blechlage umfasst, die durch mindestens eine der vorstehend beschriebenen Laschenverbindungen miteinander verbunden sind. Dies ist bisher der bevorzugte Einsatzbereich der erfindungsgemäßen Laschenverbindung, da sie keine größere Dicke als die Gesamtdicke der Zylinderkopfdichtung erzeugt, und daher im verpressten Bereich der Zylinderkopfdichtung angebracht werden kann. Da Metall-Zylinderkopfdichtungen meist aus Lagen aus Federstahl hergestellt werden, können die Materialeigenschaften von Federstahl bei dieser Klemmverbindung ausgenutzt werden. Es werden keine zusätzlichen Verbindungselemente, wie Nieten benötigt, um die einzelnen Lagen der Zylinderkopfdichtung miteinander zu verbinden. Es treten keine Gefügeveränderungen im Material der Metall-Lagen durch Wärmeeinfluss auf, wie es im Fall einer Schweißverbindung der Fall wäre. Durch einen Verbindungspunkt, der drei Verbindungslaschen umfasst die in einem Winkel zueinander angeordnet sind, sind die Lagen einer Metall-Zylinderkopfdichtung hinreichend fixiert. Die Verbindung gestattet insbesondere bei einer passenden Anordnung der einzelnen Laschen zueinander sowohl eine ausreichende Stabilität gegenüber einem Trennen der Lagen als auch eine ausreichende Stabilität gegenüber einem Verschieben der Lagen gegeneinander.

Gemäß einer weiteren Ausführungsform der vorliegenden Erfindung umfasst die Metall-Zylinderkopfdichtung mindestens drei Blechlagen, wobei jeweils zwei bzw. mindestens zwei benachbarte Blechlagen mit einer Laschenverbindung nach einem der vorstehenden Ansprüche verbunden sind. Es ist ebenfalls möglich, die Verbindung direkt mit drei oder vier Lagen auszuführen wobei die Laschen / Öffnungen jeweils zweier benachbarter Lagen funktonal identisch ausgeführt sind.

Gemäß einer anderen Ausführungsform der vorliegenden Erfindung umfasst die Metall-Zylinderkopfdichtung zwischen den Laschenverbindungen bzw. in der Mitte einer dreieckigen Laschenverbindung eine Durchgangsöffnung zur Positionierung, für einen Mediendurchgang oder für einen Brennraum. Die Durchgangsöffnung ist bevorzugt mit einem um die Durchgangsöffnung umlaufenden Dichtungselement versehen. Das Dichtungselement kann innerhalb der Laschen d.h. zwischen der Durchgangsöffnung und den Laschen angeordnet sein, kann aber auch um die Laschenverbindung umlaufend angeordnet sein.

Es solle darauf hingewiesen werden, dass die Laschen erfindungsgemäß nicht in einer Richtung senkrecht zu einer Ebene der Bleche plastisch verformt werden, sondern die Verbindung lediglich auf Grundlage der als Blattfedern dienenden Laschen basiert.

In der folgenden Beschreibung der Figuren wird die vorliegende Erfindung anhand von schematischen und nicht-maßstabgerechten Figuren dargestellt, die den durch die Ansprüche definierten Schutzumfang jedoch nicht einschränken sollen.
Figur 1 zeigt eine Schnittansicht einer herkömmlichen Laschenverbindung.
Figuren 2A bis 2E zeigen verschiedene Ausführungen einer grundlegenden Ausführung einer herkömmlichen Laschenverbindung.
Figuren 3A bis 3E zeigen verschiedene Ausführungen einer anderen grundlegenden Ausführung einer herkömmlichen Laschenverbindung.
Figuren 4A bis 4F zeigen verschiedene Ausführungen einer zusätzlichen Ausführung einer erfindungsgemäßen Laschenverbindung.
Figuren 5 zeigt eine Zylinderkopfdichtung mit Laschenverbindungen gemäß Figur 4A bis 4F.

Sowohl in den Figuren als auch in der Beschreibung werden gleiche oder ähnliche Bezugszeichen verwendet, um auf gleiche oder ähnliche Elemente und/oder Komponenten Bezug zu nehmen. Um die Beschreibung knapp und prägnant zu halten werden Bezugszeichen die bereits mit Bezug auf andere Figuren beschrieben wurden nicht noch einmal in der Beschreibung erwähnt, sofern nicht

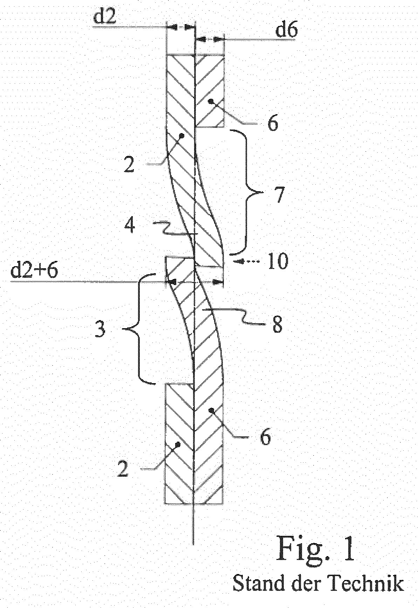

Figur 1 zeigt eine Schnittansicht einer herkömmlichen Laschenverbindung. In der Schnittansicht ist lediglich der Bereich des Schnitts, nicht jedoch der dahinterliegende Verlauf der Bleche dargestellt. Die erste Blechlage 2 ist auf der linken Seite angeordnet. Die zweite Blechlage 6 ist auf der rechten Seite angeordnet. Die erste Blechlage 2 umfasst eine erste Ausnehmung 3 (wobei in der Schnittansicht nur den Teil der Ausnehmung darstellt, der sich von dem Ende der Lasche 4 bis in Richtung der Lasche 4 erstreckt). Die zweite Blechlage 6 umfasst eine zweite Ausnehmung 7. Die erste Lasche 4 ist in Richtung der zweiten Blechlage 6 gebogen und erstreckt sich in die Ausnehmung 7 hinein. Genauso erstreckt sich zweite Lasche 8 in Richtung der ersten Blechlage 2 und erstreckt sich in die Ausnehmung 3 hinein.

Die erste Lasche 4 und die zweite Lasche 8 überlappen sich in einem Überlappungsbereich 10. Die beiden Laschen 4 und 8 liegen aufeinander auf. Die Laschen 4 und 8 wirken als Blattfedern und sind bestrebt, wieder in die Ebene des jeweiligen Bleches zurückzufedern. Die Laschen 4 und 8 verhindern dies gegenseitig. Durch die von den Laschen 4 bzw. 8 ausgeübten Kräfte werden die beiden Blechlagen 2 und 6 aufeinander gepresst.

Die erste Blechlage 2 weist eine Dicke d2 auf. Die zweite Blechlage 6 weist eine Dicke d6 auf. Die Gesamtdicke d(2+6) der beiden verbundenen Bleche überschreitet an keiner Stelle die Summe der dicken d2 und d6. Daher kann die Verbindung auch in einem Verpressungsbereich beispielsweise einer Zylinderkopfdichtung verwendet werden.

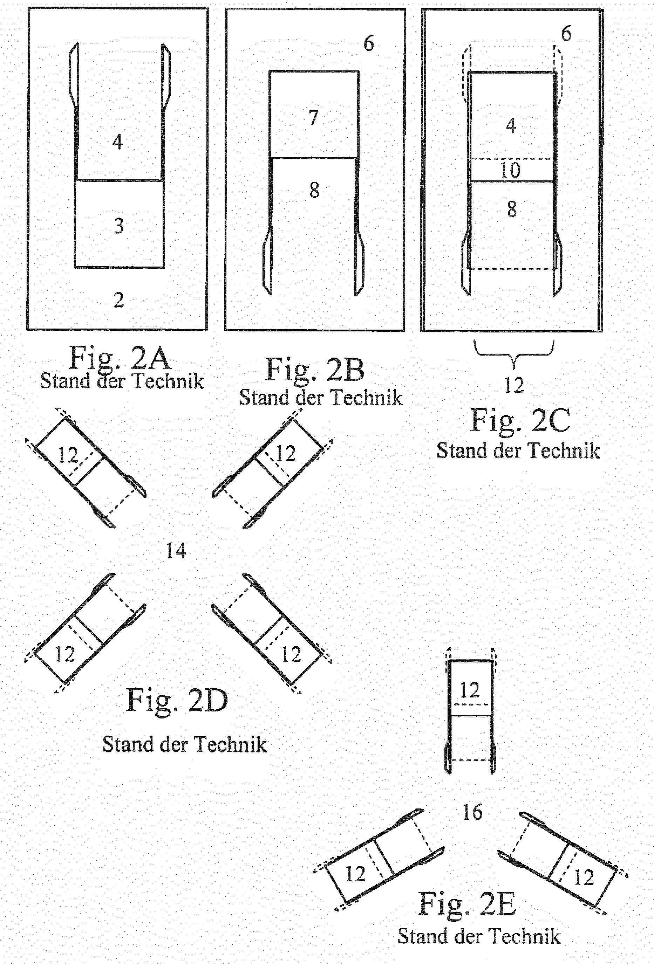

Eine einzelne Verbindung nach Figur 1 könnte leicht durch ein Verschieben der ersten Blechlage 2 nach oben (in Richtung des oberen Blattrandes) und der zweiten Blechlage 6 nach unten (in Richtung des unteren Blattrandes) gelöst werden. Dieses kann durch die Ausführungen der Figuren 2D. 2E und 4A bis 5 verhindert werden.

Figur 2A zeigt eine Aufsicht auf eine herkömmliche Ausführung einer ersten Blechlage 2, mit einer ersten Ausnehmung 3 und einer ersten Lasche 4. Die Blechlage 2 kann dabei ein Teil eines größeren Blechbauteils sein. Die erste Lasche 4 kann aus der Zeichenebene heraus nach oben oder nach unten gebogen werden, und dient dabei als Blattfeder.

Figur 2B zeigt eine Aufsicht auf eine weitere herkömmliche Ausführung einer zweiten Blechlage 6, mit einer zweiten Ausnehmung 7 und einer zweiten Lasche 8. Die zweite Blechlage 6 kann dabei ebenfalls ein Teil eines größeren Blechbauteils sein. Die zweite Lasche 8 kann hier ebenfalls aus der Zeichenebene heraus nach oben oder nach unten gebogen werden, und dient dabei als Blattfeder.

Figur 2C zeigt eine Aufsicht auf eine herkömmliche Ausführung, bei der die erste Blechlage 2 mit der zweiten Blechlage 6 durch die Laschenverbindung 12 miteinander verbunden sind. Die erste Blechlage 2 wird hier von der zweiten Blechlage 6 verdeckt. Die erste Lasche 4 erstreckt sich durch die zweite Ausnehmung in der zweiten Blechlage über die zweite Lasche 8. Die erste Lasche 4 und die zweite Lasche 8 stehen in einem Überlappungsbereich 10 miteinander in Eingriff. Das Ende der nach unten gebogenen zweiten Lasche 8 ist daher von dem Ende der ersten Lasche 4 verdeckt.

Die Breite der ersten Lasche 4 entspricht im Eingriffsbereich bzw. im Überlappungsbereich 10 gerade der Breite der Breite der zweiten Ausnehmung 7 an dieser Stelle, wodurch diese Verbindung eine seitliche Verschiebung der ersten Blechlage 2 gegenüber der zweiten Blechlage 6 verhindern kann.

Figur 2D zeigt eine Aufsicht auf eine herkömmliche Gruppe 14 umfassend vier Laschenverbindungen 12. Die Laschenverbindungen sind in einem Winkel von 90° zueinander angeordnet. Die Laschen der oberen Blechlage verlaufen nach außen, während die Laschen der unteren Blechlage nach innen gerichtet sind. In dieser Anordnung kann die Gruppe 14 aus vier Laschenverbindungen 12 eine Positionierung bzw. eine Ausrichtung der der Blechlagen in alle Richtungen zueinander erreichen.

Figur 2E zeigt eine Aufsicht auf eine weitere herkömmliche Gruppe 16 umfassend drei Laschenverbindungen 12. Die Laschenverbindungen sind in einem Winkel von 120° zueinander angeordnet. Die Laschen der oberen Blechlage verlaufen nach außen und in die Zeichenebene hinein, während die Laschen der unteren Blechlage nach innen gerichtet sind und aus der Zeichenebene nach oben gebogen sind. In dieser Anordnung kann die Gruppe 16 aus drei Laschenverbindungen 12 ebenfalls eine Positionierung bzw. eine Ausrichtung der der Blechlagen in alle Richtungen zueinander erreichen.

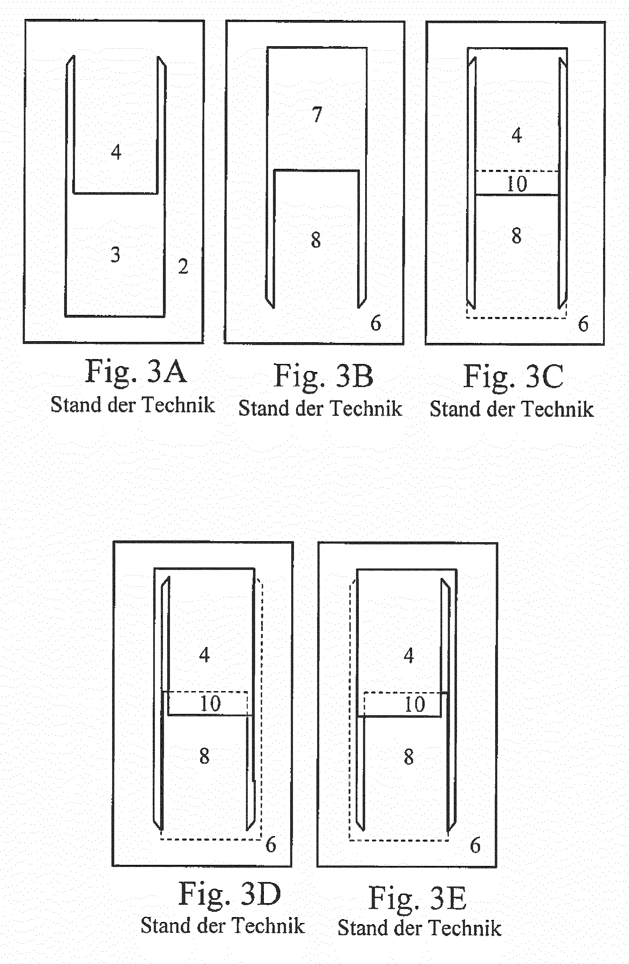

Figuren 3A bis 3C entsprechen den Figuren 2A bis 2C, wobei die Breiten der Laschen 4 und 8 kleiner ist als die jeweiligen Breiten der Ausnehmungen 3 7 im Überlappungsbereich 10.

Der Effekt dieser veränderten Auslegung ist in den Figuren 3D und 3E zu erkennen. Eine Laschenverbindung gemäß Figuren 3A bis 3C gestattet es durch die unterschiedlichen Breiten der Laschen 4, 8 und Ausnehmungen 3, 7 dass sich die Blechlagen 2 und 6 seitlich gegeneinander verschieben können. In Figur 3D ist die zweite obere Blechlage 6 nach links verschoben, während in Figur 3E die die zweite obere Blechlage 6 nach rechts verschoben ist. Eine derartige Auslegung kann eine Verbindung ermöglichen die weniger empfindlich gegenüber unterschiedlichen Wärmeausdehnungen der einzelnen Blechlagen ist.

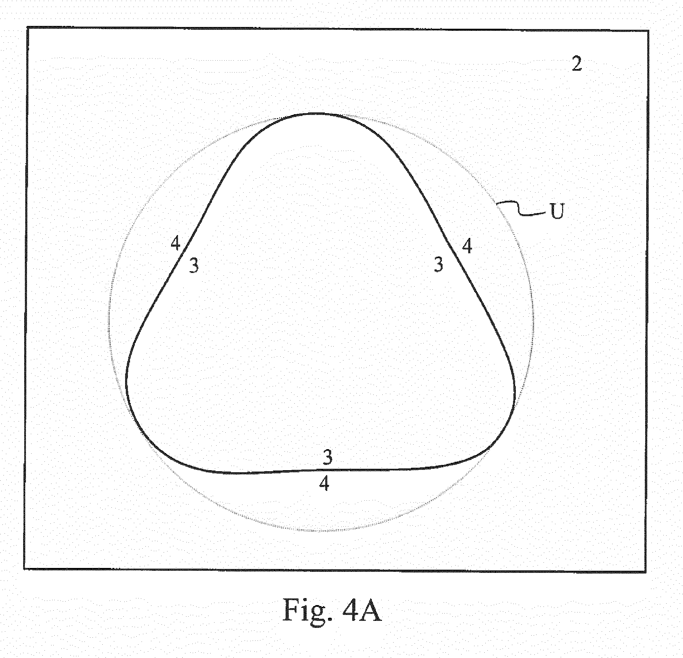

Fig. 4A zeigt eine erfindungsgemäße Ausführung einer ersten Ausnehmung 3 in einer ersten Blechlage 2 mit drei Laschen 4. Die Laschen 4 erstrecken sich von dem Umkreis U der im Wesentlichen dreieckigen ersten Ausnehmung 3 nach innen.

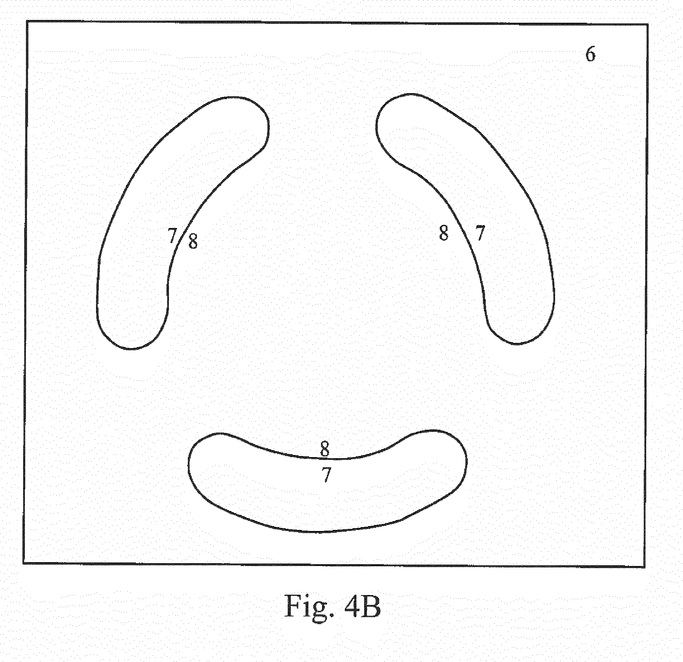

Fig. 4B zeigt eine erfindungsgemäße Ausführung mit drei zweiten Ausnehmungen 7 in einer zweiten Blechlage 6, wobei jede Ausnehmung eine zweite Laschen 8 aufweist die sich am Innenrand der nierenförmigen Ausnehmungen 7 radial nach außen erstrecken.

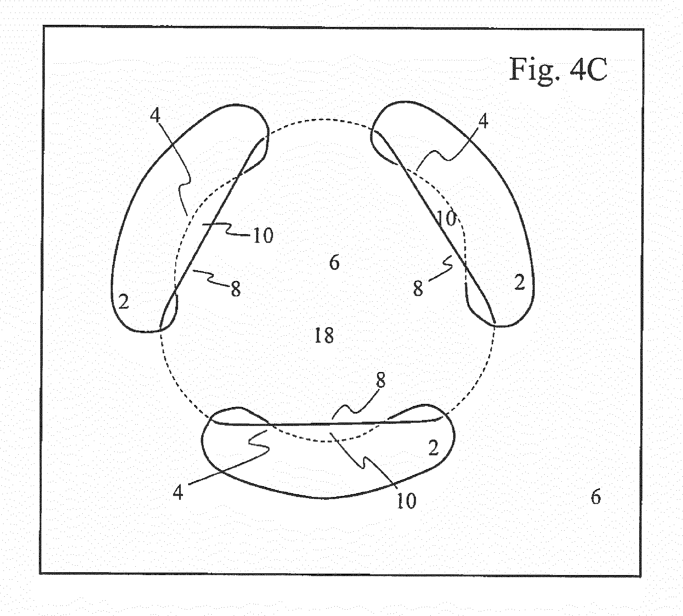

Fig. 4C zeigt eine Aufsicht auf eine erfindungsgemäße Ausführung, bei der die erste Blechlage 2 mit der zweiten Blechlage 6 durch die Laschenverbindung bzw. einer Gruppe 18 aus drei Laschenverbindungen miteinander verbunden sind. Die erste Blechlage 2 wird hier von der zweiten Blechlage 6 verdeckt. Die drei ersten Laschen 4 erstrecken sich jeweils durch die drei zweiten Ausnehmungen in der zweiten Blechlage 6 über die zweiten Laschen 8. Die drei ersten Laschen 4 und die drei zweiten Laschen 8 stehen jeweils in drei Überlappungsbereichen 10 miteinander in Eingriff. Die Enden der nach unten gebogenen zweiten Laschen 8 sind daher jeweils von den Enden der ersten Laschen 4 verdeckt. Durch die Gruppierung 18 der drei Laschenverbindungen wird ein Verbindungspunkt geschaffen, der eine Ausrichtung und Positionierung in alle drei Raunrichtungen gestattet.

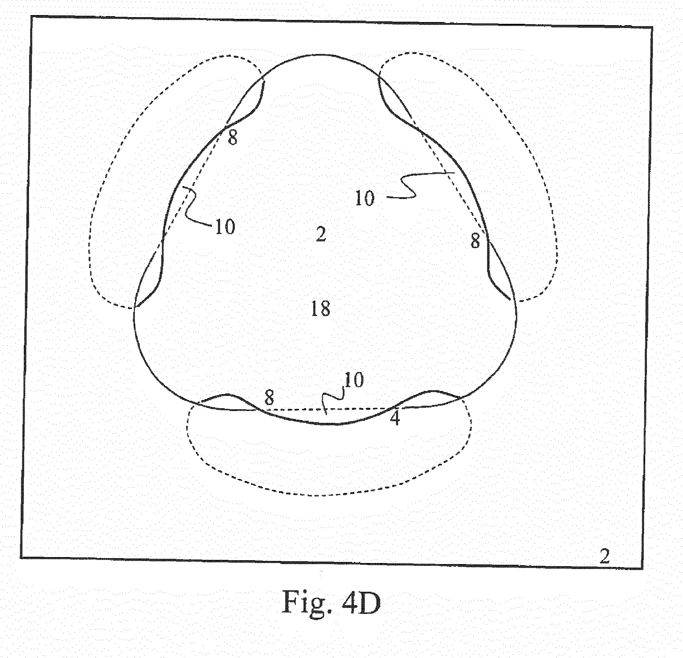

Fig. 4D zeigt die erfindungsgemäße Verbindung von Figur 4C von der anderen Seite. Hier liegt nun die erste Blechlage 2 über der zweiten Blechlage 6. Die Laschenverbindung bzw. eine Gruppe 18 aus drei Laschenverbindungen verbindet die erste Blechlage 2 und die zweite Blechlage 6. Die zweite Blechlage 6 wird hier von der ersten Blechlage 6 verdeckt. Die drei ersten Laschen 4 erstrecken sich jeweils von oben durch die drei zweiten Ausnehmungen in der zweiten Blechlage 6 bis unter die zweiten Laschen 8. Die drei ersten Laschen 4 und die drei zweiten Laschen 8 stehen jeweils in drei Überlappungsbereichen 10 miteinander in Eingriff. Die Enden der nach unten gebogenen ersten Laschen 4 sind daher von den Enden der zweiten Laschen 8 verdeckt.

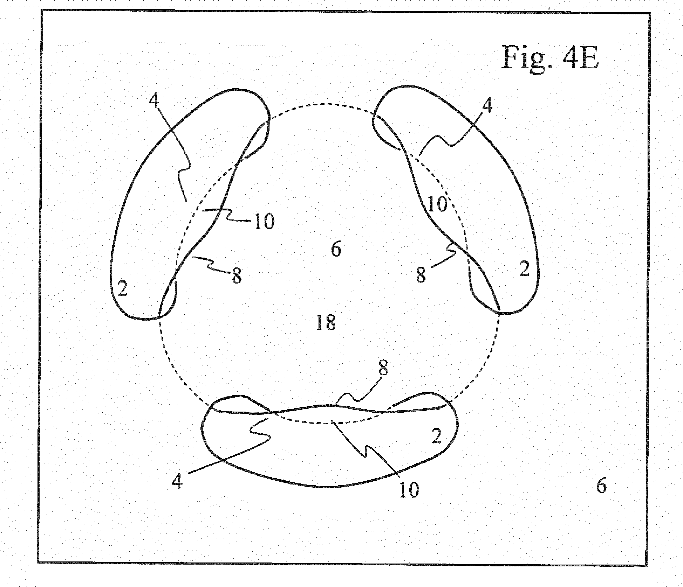

Fig. 4E zeigt eine erfindungsgemäße Verbindung ähnlich der der Figuren 4A bis D. Die Figur entspricht der Figur 4C. Im Gegensatz zu der Ausführung der Figuren 4A bis D sind die Laschen 4 der ersten Lage deutlicher nach innen ausgeformt und die zweiten Laschen sind weniger deutlich nach außen ausgeformt. Figur 4E soll lediglich eine Möglichkeit darstellen wie die Laschenverbindung der vorliegenden Erfindung leicht abgewandelt werden kann.

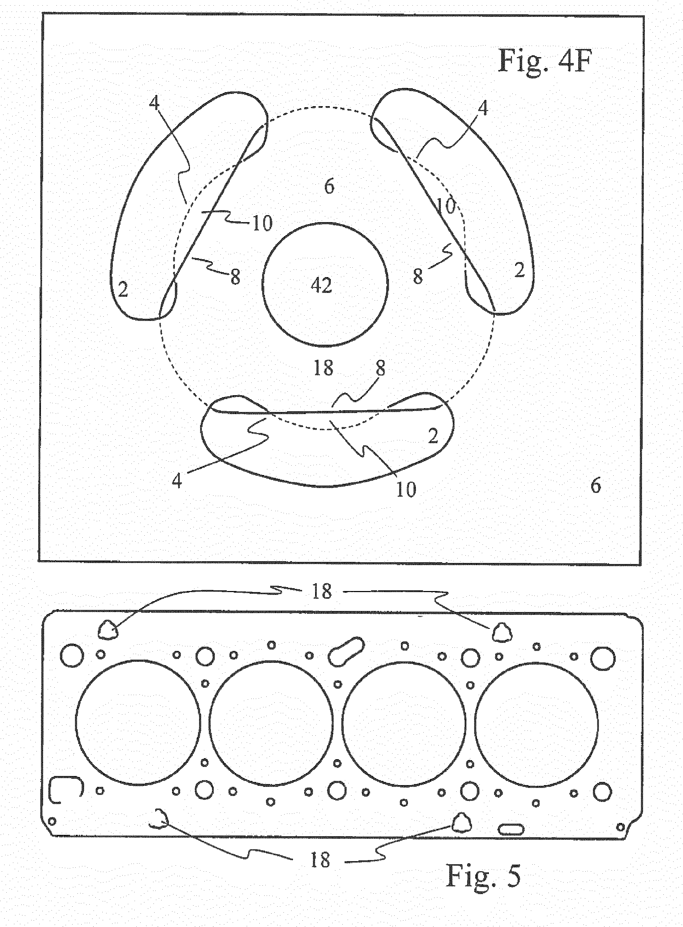

Figur 4F zeigt die erfindungsgemäße Verbindung von Figur 4C, wobei weiterhin eine Öffnung 42 in der zweiten Blechlage 6 angeordnet ist. Die Öffnung oder Durchgangsöffnung 472 ist zwischen den Laschenverbindungen bzw. in der Mittel einer dreieckigen Laschenverbindung angeordnet. Die Durchgangsöffnung 42 kann zur Positionierung, für einen Mediendurchgang oder für einen Brennraum vorgesehen sein. Die Durchgangsöffnung 42 kann weiterhin mit einem um die Durchgangsöffnung 42 verlaufendem Dichtungselement (nicht dargestellt) versehen sein. Das Dichtungselement kann innerhalb der Laschen d.h. zwischen der Durchgangsöffnung und den Laschen angeordnet sein, kann aber auch um die Laschenverbindung umlaufend angeordnet sein. Die Laschenverbindung kann dabei auch in Bereichen eingesetzt werden, die bereits eine weitere Funktionalität aufweisen. Damit kann die erfindungsgemäße Laschenverbindung auch eingesetzt werden wenn nur wenig Platz für die Verbindung zur Verfügung steht.

Fig. 5 zeigt ein Beispiel einer mehrlagigen Metall-Zylinderkopfdichtung deren Lagen durch vier Gruppen 18 von erfindungsgemäßen Laschenverbindungen miteinander verbunden sind.

Die Verbindung trägt nicht auf und kann im verpressten Bereich einer Zylinderkopfdichtung angebracht werden. Die Verbindung nutzt die Materialeigenschaften von Federstahl, einem bevorzugten Material für metallische Zylinderkopfdichtungen. Es werden keine zusätzlichen Verbindungselemente, wie Nieten benötigt. Es entstehen keine Gefügeveränderungen im Material durch Wärmeeinfluss. Durch einen Verbindungspunkt, der drei Verbindungslaschen umfasst, sind die Lagen einer mehrlagigen Zylinderkopfdichtung ausreichend in Achsenrichtung Z (senkrecht zur Erstreckungsebene) fixiert. Durch die drei Verbindungsstege zwischen den Ausnehmungen, die durch die Ecken der dreieckigen Ausnehmung gedrückt werden, sind die Lagen in den Raumrichtungen parallel zu der Erstreckungsebene der Zylinderkopfdichtung fixiert. Es kann eine Verdrehung der Lagen um eine Achse senkrecht zur Erstreckungsebene der Zylinderkopfdichtung verhindert werden.

### Bezugszeichenliste

- 2: erste Blechlage
- 3: erste Ausnehmung
- 4: erste Verbindungslasche
- 6: zweite Blechlage
- 7: zweite Ausnehmung
- 8: zweite Verbindungslasche
- 10: Überlappungsbereich der erste/zweite Verbindungslasche
- 12: Laschenverbindung
- 14: Gruppe aus vier Laschenverbindungen
- 16: Gruppe aus drei Laschenverbindungen
- 18: Gruppe aus drei Laschenverbindungen
- 42: Zentrierungsöffnung / Mediendurchgang / Brennraumöffnung
- d2: Dicke der ersten Blechlage
- d6: Dicke der zweiten Blechlage
- d2+6: Dicke der ersten und zweiten Blechlage zusammen
- U: Umkreis

## Patentansprüche

1. Laschenverbindung (12, 14, 16, 18) zum Verbinden von Blechlagen, umfassend
eine erste Blechlage (2) mit mindestens einer ersten Ausnehmung (3), in der jeweils mindestens eine erste Verbindungslasche (4) gebildet ist, und
eine zweite Blechlage (6) mit mindestens einer zweiten Ausnehmung (7), in der jeweils mindestens eine zweite Verbindungslasche (8) gebildet ist,
wobei jeweils eine erste Verbindungslasche (4) und eine zweite Verbindungslasche (8) in einem Überlappungsbereich (10) miteinander in Eingriff stehen,
**dadurch gekennzeichnet, dass**
die mindestens eine erste Ausnehmung (3, 40) im Wesentlichen die Form eines gleichseitigen Dreiecks aufweist, wobei die drei Seiten drei erste Laschen (4) bilden und wobei die mindestens eine zweite Ausnehmung (7) drei im Wesentlichen nierenförmige Ausnehmungen (42) umfasst, die auf einem Kreis liegen, wobei die Laschen radial nach außen weisen.

2. Laschenverbindung (12, 14, 16, 18) nach Anspruch 1, wobei die erste Blechlage (2) eine erste Ebene bildet, und die zweite Blechlage (6) eine zweite Ebene bildet, und wobei sich bei der Laschenverbindung die mindestens eine erste Lasche (4) von der ersten Ebene in die zweite Ebene erstreckt, und wobei sich bei der Laschenverbindung die mindestens eine zweite Lasche (8) von der zweiten Ebene in die erste Ebene erstreckt.

3. Laschenverbindung (12, 14, 16, 18) nach Anspruch 2, wobei sich in einem Bereich, in dem sich die mindestens eine erste Lasche (4) von der ersten Ebene in die zweite Ebene erstreckt, die zweite Blechlage (6) die mindestens eine zweite Ausnehmung (7) aufweist, und wobei sich in einem Bereich, in dem sich die mindestens eine zweite Lasche (8) von der zweiten Ebene in die erste Ebene erstreckt, die erste Blechlage (2) die mindestens eine erste Ausnehmung (3) aufweist.

4. Laschenverbindung (12, 14, 16, 18) nach einem der vorstehenden Ansprüche, wobei die mindestens eine erste und/oder zweite Ausnehmung (3, 7) eine nicht-einheitliche Breite aufweisen.

5. Laschenverbindung (12, 14, 16, 18) nach einem der vorstehenden Ansprüche 1-4, wobei eine Breite der mindestens einen ersten und/oder zweiten Ausnehmungen im größer ist als eine Breite der jeweiligen mindestens einen zweiten und/oder ersten Lasche (8, 4).

6. Laschenverbindung (12, 14, 16, 18) nach einem der vorstehenden Ansprüche 1-5, wobei sich die Formen der mindestens einen ersten Lasche (4) und der mindesten einen zweiten Lasche (8) voneinander unterscheiden, wobei sich die Form der mindestens einen ersten Ausnehmung (3) und die Form der mindestens einen zweiten Ausnehmung (7) voneinander unterscheiden.

7. Laschenverbindung nach einem der vorstehenden Ansprüche 1-6, wobei die erste Blechlage (2) eine andere Dicke (d2) aufweist als die zweite Blechlage (6; d6).

8. Bleche, verbunden mit mindestens einer Laschenverbindung (12, 14, 16, 18) nach einem der vorstehenden Ansprüche 1-7.

9. Metallene Zylinderkopfdichtung umfassend mindestens eine erste Blechlage (2) und mindestens eine zweite Blechlage (6) verbunden mit mindestens einer Laschenverbindung (12, 14, 16, 18) nach einem der vorstehenden Ansprüche 1-7.

10. Metallene Zylinderkopfdichtung umfassend mindestens drei Blechlagen, wobei zwei benachbarte Blechlagen mit einer Laschenverbindung (12, 14, 16, 18) nach einem der vorstehenden Ansprüche 1-7 verbunden sind.

11. Metallene Zylinderkopfdichtung nach Anspruch 9 oder 10, wobei zwischen den Laschenverbindungen (12, 14, 16) bzw. in der Mitte einer Laschenverbindung (18) eine Durchgangsöffnung (42) zur Positionierung für einen Mediendurchgang oder für einen Brennraum angeordnet ist, wobei die Durchgangsöffnung bevorzugt mit einem umlaufenden Dichtungselement versehen ist.

## Claims

1. A tab connection (12, 14, 16, 18) for connecting sheet metal layers, comprising
a first sheet metal layer (2) having at least one first recess (3) in which at least one first connecting tab (4) is formed in each case, and
a second sheet metal layer (6) having at least one second recess (7) in which at least one second connecting tab (8) is formed in each case,
wherein a first connecting tab (4) and a second connecting tab (8) are in each case engaged with one another in an overlap area (10),
**characterized in that**
the at least one first recess (3, 40) essentially has the shape of an equilateral triangle, wherein the three sides form three first tabs (4), and wherein the at least one second recess (7) includes three essentially kidney-shaped recesses (42) situated on a circle, wherein the tabs face radially outwardly.

2. The tab connection (12, 14, 16, 18) according to Claim 1, wherein the first sheet metal layer (2) forms a first plane and the second sheet metal layer (6) forms a second plane, and wherein in the tab connection, the at least one first tab (4) extends from the first plane into the second plane, and wherein in the tab connection, the at least one second tab (8) extends from the second plane into the first plane.

3. The tab connection (12, 14, 16, 18) according to Claim 2, wherein the second sheet metal layer (6) has the at least one second recess (7) in an area in which the at least one first tab (4) extends from the first plane into the second plane, and wherein the first sheet metal layer (2) has the at least one first recess (3) in an area in which the at least one second tab (8) extends from the second plane into the first plane.

4. The tab connection (12, 14, 16, 18) according to one of the preceding claims, wherein the at least one first and/or second recess (3, 7) have/has a nonuniform width.

5. The tab connection (12, 14, 16, 18) according to one of preceding Claims 1 to 4, wherein a width of the at least one first and/or second recess is greater than a width of the respective at least one second and/or first tab (8, 4).

6. The tab connection (12, 14, 16, 18) according to one of preceding Claims 1 to 5, wherein the shapes of the at least one first tab (4) and of the at least one second tab (8) are different, wherein the shape of the at least one first recess (3) is different from the shape of the at least one second recess (7).

7. The tab connection according to one of preceding Claims 1 to 6, wherein the thickness (d2) of the first sheet metal layer (2) is different from that of the second sheet metal layer (6; d6).

8. Metal sheets that are connected to at least one tab connection (12, 14, 16, 18) according to one of preceding Claims 1 to 7.

9. A metallic cylinder head gasket comprising at least one first sheet metal layer (2) and at least one second sheet metal layer (6) connected to at least one tab connection (12, 14, 16, 18) according to one of preceding Claims 1 to 7.

10. A metallic cylinder head gasket comprising at least three sheet metal layers, wherein two adjacent sheet metal layers are connected to a tab connection (12, 14, 16, 18) according to one of preceding Claims 1 to 7.

11. The metallic cylinder head gasket according to Claim 9 or 10, wherein a through opening (42) for positioning for media access or for a combustion chamber is situated between the tab connections (12, 14, 16) or in the middle of a tab connection (18), wherein the through opening is preferably provided with a circumferential sealing element.

## Revendications

1. Eclissage (12, 14, 16, 18) pour relier des couches de tôle, comprenant une première couche de tôle (2) avec au moins un premier évidement (3) dans lequel respectivement au moins une première éclisse (4) est formée, et
une deuxième couche de tôle (6) avec au moins un deuxième évidement (7) dans lequel respectivement au moins une deuxième éclisse (8) est formée,
dans lequel respectivement une première éclisse (4) et une deuxième éclisse (8) sont en prise l'une avec l'autre dans une zone de chevauchement (10),
**caractérisé en ce que** ledit au moins un premier évidement (3, 40) présente substantiellement la forme d'un triangle équilatéral, dans lequel les trois côtés forment trois éclisses (4), et dans lequel ledit au moins un deuxième évidement (7) comprend trois évidements (42) substantiellement en forme de haricot situés sur un cercle, les éclisses étant tournées radialement vers l'extérieur.

2. Eclissage (12, 14, 16, 18) selon la revendication 1, dans lequel la première couche de tôle (2) forme un premier plan et la deuxième couche de tôle (6) forme un deuxième plan, et dans lequel, à l'éclissage, ladite au moins une première éclisse (4) s'étend du premier plan dans le deuxième plan, et dans lequel, à l'éclissage, ladite au moins une deuxième éclisse (8) s'étend du deuxième plan dans le premier plan.

3. Eclissage (12, 14, 16, 18) selon la revendication 2, dans lequel, dans une zone dans laquelle s'étend ladite au moins une première éclisse (4) du premier plan dans le deuxième plan, la deuxième couche de tôle (6) présente au moins un deuxième évidement (7), et dans lequel, dans une zone dans laquelle ladite au moins une deuxième éclisse (8) s'étend du deuxième plan dans le premier plan, la première couche de tôle (2) présente ledit au moins un premier évidement (3).

4. Eclissage (12, 14, 16, 18) selon l'une quelconque des revendications précédentes, dans lequel les au moins un premier et/ou deuxième évidements (3, 7) présentent une largeur non homogène.

5. Eclissage (12, 14, 16, 18) selon l'une quelconque des revendications précédentes 1 à 4, dans lequel une largeur des au moins un premier et/ou deuxième évidements est supérieure à une largeur des au moins une deuxième et/ou première éclisses (8, 4) respectives.

6. Eclissage (12, 14, 16, 18) selon l'une quelconque des revendications précédentes 1 à 5, dans lequel les formes de ladite au moins une première éclisse (4) et de ladite au moins une deuxième éclisse (8) sont différentes l'une de l'autre, dans lequel la forme dudit au moins un premier évidement (3) et la forme dudit au moins un deuxième évidement (7) sont différentes l'une de l'autre.

7. Eclissage selon l'une quelconque des revendications précédentes 1 à 6, dans lequel la première couche de tôle (2) présente une épaisseur différente (d2) de la deuxième couche de tôle (6 ; d6).

8. Tôles, reliées par au moins un éclissage (12, 14, 16, 18) selon l'une quelconque des revendications précédentes 1 à 7.

9. Joint de culasse métallique, comprenant au moins une première couche de tôle (2) et au moins une deuxième couche de tôle (6) reliées par au moins un éclissage (12, 14, 16, 18) selon l'une quelconque des revendications précédentes 1 à 7.

10. Joint de culasse métallique, comprenant au moins trois couches de tôle, dans lequel deux couches de tôle adjacentes sont reliées par un éclissage (12, 14, 16, 18) selon l'une quelconque des revendications précédentes 1 à 7.

11. Joint de culasse métallique selon la revendication 9 ou 10, dans lequel entre les éclissages (12, 14, 16) ou au centre d'un éclissage (18), une ouverture de passage (42) est disposée pour positionner un passage de fluides ou pour une chambre de combustion, l'ouverture de passage étant de préférence munie d'un élément d'étanchéité périphérique.
